Europäisches Patentamt

European Patent Office

Office européen des brevets

(11) Veröffentlichungsnummer: **0 265 871**
**A1**

# EUROPÄISCHE PATENTANMELDUNG

(21) Anmeldenummer: 87115590.9

(22) Anmeldetag: 23.10.87

(51) Int. Cl.⁴ **A01D 34/63** , A01D 34/67 , A01D 34/82

(30) Priorität: 25.10.86 DE 3636385

(43) Veröffentlichungstag der Anmeldung:
04.05.88 Patentblatt 88/18

(84) Benannte Vertragsstaaten:
AT BE FR GB IT LU NL SE

(71) Anmelder: GUTBROD-WERKE GMBH
Industriegelände Postfach 60
D-6601 Saarbrücken-Bübingen/Saar(DE)

(72) Erfinder: Klever, Manfred
Scheidter Strasse 40
D-6601 Saarbrücken-Scheidterberg(DE)
Erfinder: Rott, Karl-Heinz
Waldstrasse 17
D-6601 Saarbrücken-Bübingen(DE)

(74) Vertreter: Boecker, Carl Otto, Dipl.-Ing.
Dr. Ehrhardt-Strasse 31
D-6670 St. Ingbert (Saar)(DE)

(54) Rasenmäherkombination.

(57) Ein fahrbarer Elektro-Rasenmäher wird dadurch
mehrteilig ausgebildet, daß das mit vier Laufrädern
versehene Fahrwerkgehäuse eine mittige Öffnung
zur verriegelten Aufnahme eines für sich allein betriebsfähigen sogenannten Rasentrimmers aufweist,
so daß der Rasenmäher als solcher sowie der
Rasentrimmer allein betrieben werden kann.

EP 0 265 871 A1

### "Rasenmäherkombination"

Die Erfindung betrifft einen fahrbaren Rasenmäher mit in horizontaler Ebene rotierenden, von einem Elektromotor angetriebenen Mähmessern und einem mit vier Laufrädern versehenen, die horizontale Messerebene abdeckenden Fahrwerkgehäuse.

Obwohl solche konventionellen Elektro-Rasenmäher in verschiedenen G@ößen im Handel sind, ist ihre Handhabung und insbesonder@ ihr Transport wegen der Sperrigkeit und des Gewichtes mühsam und beschwerlich, zumal Gartengeräte häufig in Kellern, Garagen oder dergleichen aufbewahrt werden.

Der Erfindung liegt die Aufgabe zugrunde, einen konventionellen Elektro-Rasenmäher mehrteilig auszubilden, so daß er leichter zu transportieren und zu verstauen ist als bisher, wobei das Zusammenfügen der Einzelteile einfach und ohne Zuhilfenahme von Werkzeugen möglich sein soll.

Die Lösung dieser Aufgabe ist in dem Patentanspruch 1 angegeben. Hiernach besteht der neue Rasenmäher aus einem mit einer mittigen Öffnung versehenen Fahrwerkgehäuse, das lediglich die vier Laufräder mit der Laufrad-Höhenverstellung aufnimmt und entsprechend leicht ist, und einem für sich allein betriebsfähigem radlosen, an sich bekannten Rasentrimmer, auch Kantenschneider oder Motorsense genannt, der das Mähwerk mit Elektromotor, ein rückwärtiges Schutzgehäuse sowie einen mit dem Schutzgehäuse verbundenen Führungsholm mit Griff umfaßt. Dieses Einsatz-Grundgerät braucht lediglich mit einem Stützrand versehen zu werden, der der Konfiguration einer die mittige Öffnung des Fahrwerkgehäuses umgebenden Stützfläche entspricht. Das Einsatz-Grundgerät ist nach dem Einpassen in die gehäuseseitige Öffnung lediglich so mit dem Fahrwerkgehäuse zu verriegeln, daß es mit dem Fahrwerkgehäuse einen vollwertigen fahrbaren Rasenmäher bildet. Es gehört zur Erfindung, eine gelenkbewegliche Anordnung einer Mehrzahl von Mähmessern am Umfang eines - scheibenartigen Rotationsgliedes anzuwenden, wie sie aus der internationalen Veröffentlichung WO 86/03092 bekanntgeworden ist. Das scheibenartige Rotationsglied kann dann einen Durchmesser erhalten, der es gerade gestattet, das Mähwerk in die gehäuseseitige Öffnung einzuführen, da die gelenkbeweglichen Mähmesser von Hand nach innen innerhalb des Umrisses des Rotationsgliedes verschwenkt werden können. Unter der Fliehkraft orientieren sich die Mähmesser radial und erhalten somit einen großen Messerkreis, der einem fahrbaren Rasenmäher angemessen ist.

Der besondere Vorteil dieser erfindungsgemäßen Mehrteiligkeit eines fahrbaren Rasenmähers besteht nicht nur darin, daß das leichte Fahrwerkgehäuse und das mit nur einem einarmigen Führungsholm versehene handliche Einsatz-Grundgerät getrennt leicht zu transportieren sind, sondern es wird mit dem als Rasentrimmer ausgebildeten Einsatz-Grundgerät ein Gras- und Rasenschneider zur Verfügung gestellt, der bisher als zusätzliches Gerät angeschafft werden mußte, um Rasenkanten, Gestrüpp oder sonstwie für den Rasenmäher schwer zugängliche Bereiche des Gartens zu pflegen. Im Hinblick auf die Rasenmäherfunktion des Einsatz-Grundgerätes ist es wünschenswert, daß der Messerkreis in Fahrtrichtung des zusammengesetzten Rasenmähers den vorderen, in Fahrtrichtung weisenden Bereich des Stützrandes des Einsatz Grundgerätes überragt, um das Rasenmähergehäuse zum seitlichen Auswurf des Schnittgutes schneckenartig ausbilden zu können. Hierzu sieht die Erfindung vor, daß die Rotationsachse des Rotationsgliedes gegenüber der Achse des Elektromotors zu den beiden vorderen Laufrädern des Fahrwerkgehäuses hin versetzt ist, und daß das Rotationsglied mit einem Randteil versehen ist, das eine Stirnradverzahnung trägt, die mit einem Motorritzel des Elektromotors im Eingriff steht. Die mit dieser Konstruktion einhergehende Übersetzung der Motordrehzahl "ins Langsame" ermöglicht die Verwendung von - schnellaufenden Elektromotoren.

Weiterbildungen der erfindungsgemäßen Rasenmäherkombination sind in den Patentansprüchen 3 bis 6 angegeben. Hervorzuheben ist die bedienungsfreundliche Gestaltung der Verriegelungsvorrichtung als Fußschalter zum leicht lösbaren Verriegeln des Einsatz-Grundgerätes mit dem Fahrwerkgehäuse des Rasenmähers.

Um die Rasenmäherkombination zum normalen Rasenmähen zu führen, kann das Fahrwerkgehäuse mit dem üblichen zweiarmigen Führungsholm versehen sein, der auch lösbar sein kann, um die Kombination für die Aufbewahrung weniger sperrig zu machen. Es kann empfehlenswert sein, auch den einarmigen Führungsholm des Einsatz-Grundgerätes über eine Steckverbindung lösbar mit dem Schutzgehäuse dieses Gerätes zu verbinden, um den Führungsholm zu entfernen, wenn mit dem zweiarmigen Führungsholm gemäht wird. Dann müßte jedoch der zweiarmige Führungsholm des Fahrwerkgehäuses ebenfalls mit einem elektrischen Fahrschalter versehen sein, der ausgangsseitig an das Einsatz-Grundgerät anschließbar ist. Gemäß der Erfindung wird jedoch vorgeschlagen, den einarmigen Führungsholm des Einsatz-Grundgerätes mit einem Querlenker in der Art eines Fahrradlenkers zu versehen, der so dimensioniert ist, daß die zusammengesetzte Gerätekombination als Rasenmäher ausreichend sicher geführt werden kann. Es erübrigt sich dann der zweiarmige Führungsholm zum Anschluß an das Fahrwerkgehäuse sowie ein zweiter Fahrschalter, wie auch auf die Lösbarkeit des nunmehr einzigen Führungsholmes der Rasenmäherkombination verzichtet werden kann. Der Querlenker am Führungsholm behindert das Arbeiten mit dem Einsatz-Grundgerät als Rasentrimmer oder Kantenschneider nicht.

Um in der Rasenmäherkombination gemäß der Erfindung eine für das Rasenmähen angemessene Motorleistung zu installieren, kann das Einsatz-Grundgerät bei der Verwendung als Rasentrimmer relativ schwer werden. Es empfiehlt sich daher, das Schutzgehäuse des Einsatz-Grundgerätes mit einem Gleitbügel zu versehen, der bei in das Fahrwerkgehäuse eingesetztem Grundgerät Bodenfreiheit hat.

In der Zeichnung ist ein Ausführungsbeispiel der Rasenmäherkombination gemäß der Erfindung dargestellt, und zwar zeigen

Fig. 1 einen Längsschnitt des als Rasenmäher zusammengesetzten Gerätes in Fahrtrichtung, teilweise in Ansicht, und

Fig. 2 eine Draufsicht von Fig. 1.

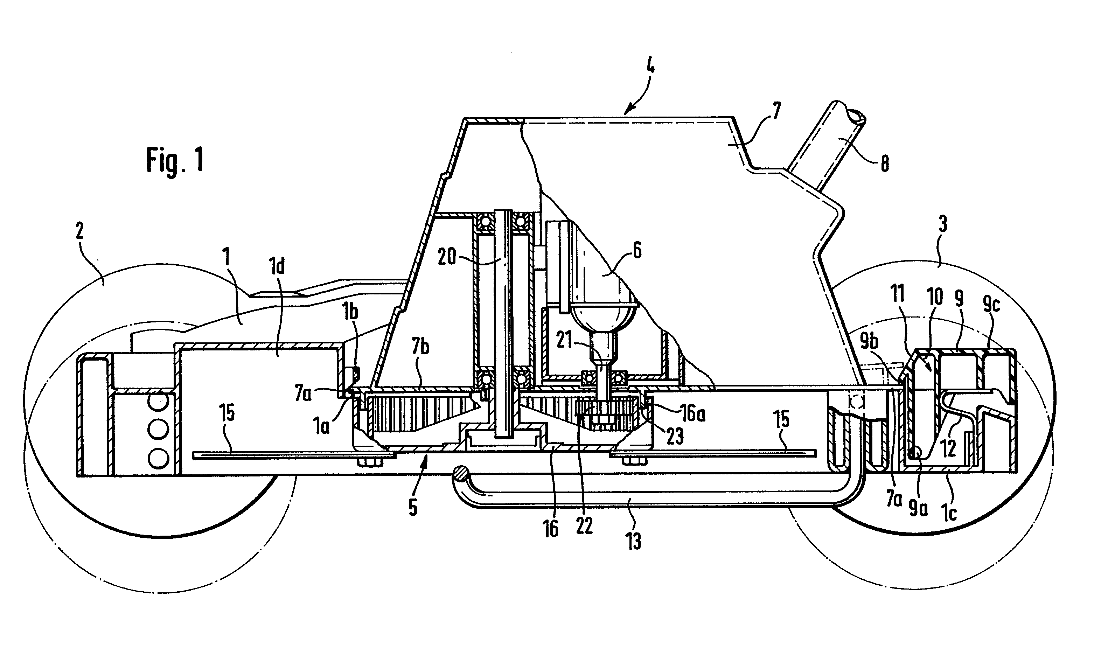

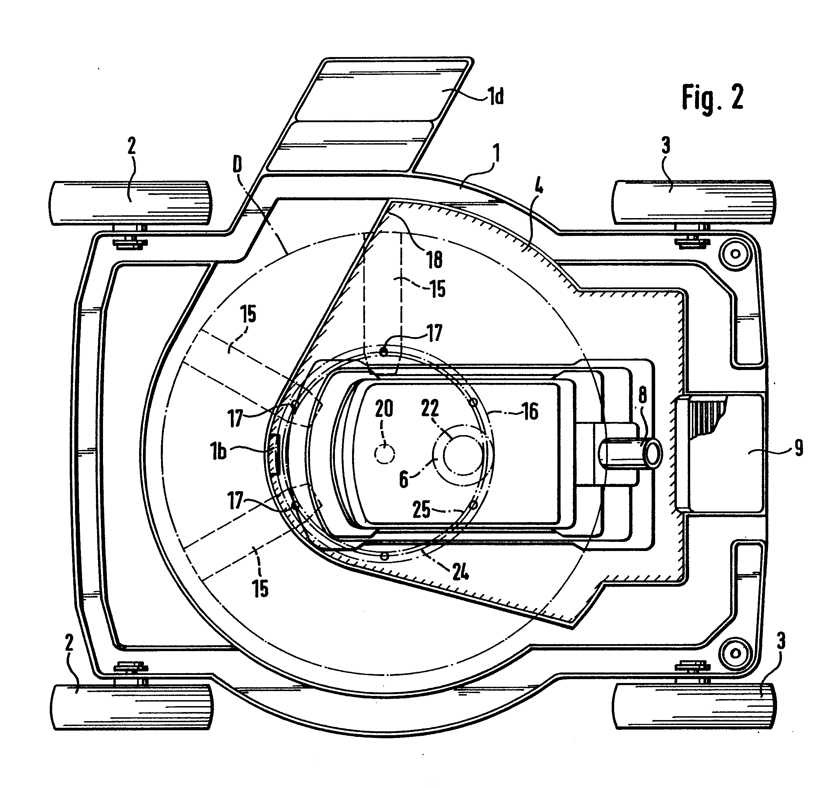

Die Rasenmäherkombination besteht im wesentlichen aus zwei miteinander kombinierbaren Einheiten, nämlich dem Fahrwerkgehäuse 1 mit den vorderen Laufrädern 2 sowie den hinteren Laufrädern 3 einerseits und einem Einsatz-Grundgerät 4, das ein für sich allein betriebsfähiger sogenannter Rasentrimmer ist und aus dem Mähwerk 5 mit Elektromotor 6, dem Schutzgehäuse 7 und einem mit dem Schutzgehäuse verbundenen einarmigen Führungsholm 8 besteht, der nur teilweise dargestellt ist. Der Umriß des Schutzgehäuses 7 des Einsatz-Grundgerätes ist in Fig. 2 durch eine Schraffur 18 hervorgehoben, die gleichzeitig die Kontur einer mittigen Öffnung des Fahrwerkgehäuses 1 definiert. Diese Öffnung ist eingerahmt von einer waagerechten Stützfläche 1a, die mit einem Stützrand 7a des Einsatz-Grundgerätes korrespondiert. Aus Fig. 1 ist ersichtlich, daß über der gehäuseseitigen Stützfläche 1a in der Nähe der vorderen Laufräder 2 eine Niederhalter-Kralle 1b angeformt ist, die in Fig. 2 in Draufsicht erkennbar ist und unter die der vordere Bereich des Stützrandes 7a des Einsatz-Grundgerätes 4 durch Schräghalten dieses Gerätes eingeführt werden kann, um das Einsatz-Grundgerät in seinem vorderen Bereich mit dem Fahrwerkgehäuse 1 zu arretieren. An dem der Kralle 1b abgewandten Bereich des Stützrandes 7a ist eine schaltbare Verriegelungsvorrichtung vorgesehen, die aus einem Fußschalter 9 besteht.

Der Fußschalter 9 besteht aus einem Kunststoffspritzgußteil und ist über zwei angeformte Achsstummel 9a in dem profilierten hinteren Teil 1c des Fahrwerkgehäuses 1 in Pfeilrichtung 10 - schwenkbar gelagert. Ferner hat der Fußschalter 9 eine angeformte Niederhalte-Kralle 9b, die in der Verriegelungs-Schwenklage des Fußschalters 9 den Stützrand 7a des Einsatz-Grundgerätes übergreift und somit verriegelt. Für eine selbsttätige Verriegelung ist die Niederhalte-Kralle 9b mit einer schrägen Auflauffläche 11 für den Stützrand 7a versehen, der beim Einsetzen des Einsatz-Grundgerätes 4 in der strichpunktiert dargestellten Schräglage an der Auflauffläche 11 aufläuft und über eine weitere Abwärtsbewegung den Fußschalter 9 in Pfeilrichtung 10 zum Ausweichen zwingt bis unter dem Druck der Blattfeder 12 der Fußschalter 9 selbsttätig in die dargestellte Verriegelungslage zurückkehrt. Umgekehrt genügt ein Druck auf die Oberfläche 9c des Fußschalters 9, um den zugeordneten Bereich des Stützrandes 7a freizugeben und das Einsatz-Grundgerät 4 von dem Fahrwerkgehäuse 1 zu lösen.

Das Schutzgehäuse 7 des Einsatz-Grundgerätes 4 ist mit einem Gleitbügel 13 versehen, der bei der nach Fig. 1 zusammengesetzten Kombination stets Bodenfreiheit hat, d. h. den Boden nie berührt, auf welche Laufradhöhe das Fahrwerkgehäuse 1 auch eingestellt ist. Wenn das Einsatz-Grundgerät aus dem Fahrwerkgehäuse 1 herausgelöst ist, steht ein für sich allein betriebsfähiger Rasentrimmer zur Verfügung. Ein weiterer Vorteil der zweiteiligen Bauart eines Rasenmähers gemäß der Erfindung besteht darin, daß das Fahrwerkgehäuse 1 mit den Laufrädern 2, 3 einerseits und das Einsatz-Grundgerät 4 getrennt voneinander transportiert werden können, um diese Teile bei Nichtgebrauch zu verstauen.

Das Mähwerk 5 des Einsatz-Grundgerätes 4 weist die Besonderheit auf, daß die Mähmesser 15 am Umfang eines tellerartigen Rotationsgliedes 16 mittels Gelenkbolzen 17 gelenkbeweglich angeschlossen sind, wie auch Fig. 2 erkennen läßt, in der nicht alle sich unter der Fliehkraft radial orientierenden Mähmesser 15 dargestellt sind. Diese Gelenkbeweglichkeit der Mähmesser 15 ist notwendig, um einen für einen Rasenmäher angemessenen relativ großen Messerkreisdurchmesser D zu erhalten (Fig. 2), ohne daß die mittige Öffnung in dem Fahrwerkgehäuse 1, die in Fig. 2 durch die Schraffur 18 angedeutet ist, vergrößert werden müßte, womit aus Stabilisierungsgründen das Fahrwerkgehäuse 1 erheblich vergrößert werden müßte. Einige der Mähmesser 15 brauchen lediglich von Hand so weit nach Innen verschwenkt zu werden, daß sie innerhalb des Umrisses des Rotationsgliedes 16 liegen, um das Einsatz-Grundgerät 4 ohne weiteres in das Fahrwerkgehäuse 1 einrasten zu können.

Wie Fig. 1 zeigt, ist die Rotationsachse 20 des Rotationsgliedes 16 gegenüber der Antriebswelle 21 des Elektromotors 6 zu den beiden vorderen Laufrädern 2 des Fahrwerkgehäuses 1 hin versetzt. Das Rotationsglied 16 ist mit einem Randteil 16a versehen, das innen mit einer Stirnverzahnung versehen ist, die mit dem Rotorritzel 22 des Elektromotors 6 im Eingriff steht. Das Randteil 16a weist einen nach oben offenen Schlitz auf, in den ein an der Bodenwand 7b des Schutzgehäuses 7 angeformter Stabilisierungsring 23 eingreift.

Das Mähwerk 5 und sein Antrieb ist in Fig. 2, da nicht sichtbar, strichpunktiert angedeutet. So gibt der Kreis 6 den Umfang des Elektromotors 6 an ,wogegen mit dem Kreis 16 der Umfang des Rotationsgliedes 16 angedeutet ist, dessen Innenverzahnung (Teilkreis 25) mit dem Rotorritzel 22 (Teilkreis 22) in Eingriff steht. Der Kreis 24 definiert den Kreis, auf dem die Gelenkbolzen 17 für die gelenkbeweglichen Mähmesser 15 liegen.

Die gegenüber dem Elektromotor 6 exzentrische Anordnung des Mähwerkes 5 führt auch dazu, daß die Mähmesser in dem Bereich nahe den vorderen Laufrädern 2 weit gegenüber der Kontur der Öffnung (Schraffur 18) vorkragen. Dies ermöglicht es, das Fahrwerkgehäuse 1 auf diesem vorderen Bereich zu einem schneckenartig leicht ansteigenden Kanal 1d für einen seitlichen Auswurf des Schnittgutes auszubilden.

**Ansprüche**

1. Fahrbarer Rasenmäher mit in horizontaler Ebene rotierenden, von einem Elektromotor angetriebenen Mähmessern und einem mit vier Laufrädern versehenen, die horizontale Messerebene abdeckenden Fahrwerkgehäuse, **dadurch gekennzeichnet,** daß das Fahrwerkgehäuse (1) eine mittige Öffnung (18) aufweist, in die von oben ein für sich alleine betriebsfähiger sogenannter Rasentrimmer (Einsatz-Grundgerät (4)) einsetzbar ist, der das Mähwerk (5) mit Elektromotor (6), ein Schutzgehäuse (7) sowie einen mit dem Schutzgehäuse verbundenen einarmigen Führungsholm (8) umfaßt, wobei das Mähwerk ein scheibenartiges Rotationsglied (16) umfaßt, an dessen Umfang eine Mehrzahl von Mähmessern (15) gelenkbeweglich angeschlossen sind, und daß das EinsatzGrundgerät mit dem Fahrwerkgehäuse verriegelbar ist, so daß das Einsatz-Grundgerät mit dem Fahrwerkgehäuse den fahrbaren Rasenmäher bildet und das Einsatz-Grundgerät für sich als Rasentrimmer betreibbar ist.

2. Rasenmäher nach Anspruch 1, dadurch gekennzeichnet, daß die Rotationsachse (20) des Rotationsgliedes (16) gegenüber der Antriebswelle (21) des Elektromotors (6) zu den beiden vorderen Laufrädern (2) des Fahrwerkgehäuses (1) hin versetzt ist, und daß das Rotationsglied mit einem Randteil (16a) versehen ist, das eine Stirnradverzahnung (24) trägt, die mit einem Rotorritzel (22) des Elektromotors im Eingriff steht.

3. Rasenmäher nach Anspruch 2, dadurch gekennzeichnet, daß die Stirnradverzahnung (24) eine Innenverzahnung ist.

4. Rasenmäher nach Anspruch 2, dadurch gekennzeichnet, daß das Randteil (16a) des Rotationsgliedes (16) einen nach oben offenen Schlitz aufweist, in den ein an der Bodenwand (7b) des Schutzgehäuses (7) des Einsatz-Grundgerätes (4) angeformter Stabilisationsring (23) eingreift.

5. Rasenmäher nach Anspruch 1, dadurch gekennzeichnet, daß die mittige Öffnung (18) des Fahrwerkgehäuses (1) von einer Stützfläche (1a) umgeben ist, die mit einem Stützrand (7a) des Einsatz-Grundgehäuses (4) korrespondiert, daß über der gehäuseseitigen Stützfläche eine Niederhalte-Kralle (1b) angeformt ist, unter die der Stützrand des Grundgerätes einführbar ist und daß an dem der Kralle abgewandten Bereich des Stützrandes eine Verriegelungsvorrichtung angeordnet ist.

6. Rasenmäher nach Anspruch 5, dadurch gekennzeichnet, daß die Niederhalte-Kralle (1b) in der Nähe der vorderen Laufräder (2) des Fahrwerkgehäuses angebracht und die Verriegelungsvorrichtung in der Nähe der hinteren Laufräder (3) angeordnet ist, wobei die Verriegelungsvorrichtung als Fußschalter (9) ausgebildet ist.

7. Rasenmäher nach Anspruch (6), dadurch gekennzeichnet, daß die Verriegelungsvorrichtung aus einem im Fahrwerkgehäuse (1) um eine Achse (9a) schwenkbaren Fußschalter (9) besteht, der in einer Verriegelungs-Schwenklage den Stützrand (7) des Grundgerätes (4) mit einer Niederhalte-Kralle (9b) übergreift und in einer Entriegelungs-Schwenklage freigibt.

8. Rasenmäher nach Anspruch 7, dadurch gekennzeichnet, daß die Niederhalte-Kralle (9b) des schwenkbaren Fußschalters (9) eine schräge Auflauffläche (11) für den Stützrand (7a) des Grundgerätes (4) aufweist und der Fußschalter in Verriegelungslage unter dem Druck einer Feder (12) steht, so daß der Fußschalter durch das Auflaufen des Stützrandes des Grundgerätes an der schrägen Auflauffläche beim Einsetzen des Grundgerätes entgegen Federkraft auswärts schwenkt und selbsttätig in Verriegelungslage zurückkehrt.

9. Rasenmäher nach Anspruch 1, dadurch gekennzeichnet, daß der einarmige Führungsholm des Einsatz-Grundgerätes mit einem Querlenker versehen ist, der bei am Fahrwerkgehäuse verriegelten Einsatz-Grundgerät waagerecht verläuft und zur Führung der Rasenmäherkombination beim Rasenmähen dimensioniert ist.

10. Rasenmäher nach Anspruch 1, dadurch gekennzeichnet, daß das Schutzgehäuse des Einsatz-Grundgerätes (4) mit einem Gleitbügel (13) versehen ist, der bei in das Fahrwerkgehäuse (1) eingesetztem Grundgerät Bodenfreiheit hat.

Fig. 1

Fig. 2

0 265 871

| | EINSCHLÄGIGE DOKUMENTE | | EP 87115590.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 4 341 060 (LOWRY et al.)<br>* Fig. 1,7; Spalte 3, Absatz 3, Zeilen 10-16 *<br>-- | 1,9 | A 01 D 34/63<br>A 01 D 34/67<br>A 01 D 34/82 |
| A | US - A - 2 154 564 (EISENLOHR)<br>* Fig. 1-3 *<br>-- | 1,2 | |
| A | GB - A - 1 551 622 (QUALCAST)<br>* Gesamt *<br>-- | 1,5,6 | |
| A | US - A - 4 356 686 (LESSIG)<br>* Fig. 1 *<br>-- | 2 | |
| A | US - A - 4 007 526 (LANGENSTEIN)<br>* Fig. 1 *<br>-- | 10 | RECHERCHIERTE SACHGEBIETE (Int. Cl.4) |
| A | US - A - 4 077 191 (PITTINGER, SR. et al.)<br>---- | | A 01 D 34/00<br>A 01 D 67/00<br>A 01 D 75/00<br>A 01 G 3/00 |

Der vorliegende Recherchenbericht wurde für alle Patentansprüche erstellt.

| Recherchenort | Abschlußdatum der Recherche | Prüfer |
|---|---|---|
| WIEN | 08-01-1988 | HAVLIK |